# EUROPÄISCHE PATENTSCHRIFT

(11) **EP 1 945 474 B1**
(45) Veröffentlichungstag und Bekanntmachung des Hinweises auf die Patenterteilung: **30.06.2010**
(21) Anmeldenummer: 06818063.7
(22) Anmeldetag: 09.11.2006
(51) Int. Cl.: B60J 7/043, B60J 7/057, B60J 7/16

(54) **VERSTELLBARES DACHTEIL EINES ÖFFNUNGSFÄHIGEN FAHRZEUGDACHES**
DISPLACEABLE ROOF PART OF AN OPENABLE VEHICLE ROOF
PIECE DE TOIT MOBILE POUR TOIT OUVRANT DE VEHICULE

(30) Priorität: 11.11.2005 DE 102005054297
(43) Veröffentlichungstag der Anmeldung: 23.07.2008
(73) Patentinhaber: Webasto AG, 82131 Stockdorf (DE)
(72) Erfinder: DIETL, Rudolf, 81247 München (DE)
(86) Internationale Anmeldenummer: PCT/DE2006/001963
(87) Internationale Veröffentlichungsnummer: WO 2007/054080

(56) Entgegenhaltungen:
- DE-A1- 3 739 506
- DE-A1- 10 203 204
- DE-A1- 10 209 901
- DE-A1- 10 211 624
- DE-C1- 10 023 844

## Beschreibung

Die Erfindung betrifft ein Dachteil eines öffnungsfähigen Fahrzeugdaches, das mittels einer Lagereinrichtung an einem Lagerschlitten bewegbar gelagert ist, der an einer Führung des Fahrzeugdaches verschiebbar gelagert und mittels eines Antriebs entlang der Führung verstellbar ist.

Aus der DE 102 03 204 A1 ist ein Faltdach eines Fahrzeugs mit einem vorderen Dachteil bekannt geworden, das mittels eines Viergelenks an einem Lagerschlitten bewegbar gelagert ist, der wiederum an einer dachseitigen Führungsbahn mittels eines Antriebs verschiebbar gelagert ist. Ein vorderer Lenker des Viergelenks ist an einer entlang der Führungsbahn verlaufenden Steuerkulisse geführt, deren Vorderabschnitt einen nach vorne hin abwärts gekrümmten Verlauf aufweist. Bei geschlossenem Faltdach ist das vordere Dachteil in einer abgesenkten Schließstellung angeordnet, da der vordere Lenker durch den abwärts gekrümmten Verlauf der Steuerkulisse nach unten geschwenkt ist. Zum Öffnen des Faltdaches wird der Lagerschlitten mittels des Antriebs entlang der Führungsbahn in Richtung der Offenstellung bewegt, wobei anfangs der vordere Lenker im Steuereingriff an der ansteigenden Steuerkulisse aufwärts verschwenkt wird und somit das vordere Dachteil gegenüber dem Lagerschlitten zwangsläufig angehoben wird. Das weitere Öffnen des Faltdaches bzw. des Dachteils erfolgt durch Verschieben des Lagerschlittens, wobei der vordere Lenker in seine obere Stellung verschwenkt ist und diese im weiteren Verlauf aufgrund der zur Führungsbahn des Lagerschlittens parallel verlaufenden Steuerkulisse beibehält. Das Anheben bzw. Absenken des vorderen Dachteils erfolgt somit zwangsläufig aufgrund der Stellung des Lagerschlittens und des festgelegten Verlaufs der Steuerkulisse und kann nicht beeinflusst werden.

Die DE 102 11 624 A1 zeigt ebenfalls ein Fahrzeug mit einem Faltverdeck, dessen Dachspitze mittels eines Viergelenks an einem jeweiligen seitlichen Gleiter bewegbar gelagert ist. Der Gleiter ist an einer dachseitigen seitlichen Führung mittels eines Antriebs verschiebbar gelagert. Ein vorderer Lenker des Viergelenks ist mittels eines Führungselements an einer Kulissenbahn geführt, die sich in ihrem Vorderabschnitt nach vorne absenkt. Wenn der Gleiter in seine vordere Endstellung bewegt wird, schwenkt das an der Kulissenbahn abwärts geführte Führungselement den vorderen Lenker abwärts, so dass die Dachspitze in ihre abgesenkte Schließstellung bewegt wird.

Aus der DE 10209901 A1 oder der DE 100 23 844 C1 ist ein öffnungsfähiges Fahrzeugdach bekannt geworden, dessen vorderes Dachteil entlang seitlicher Führungsschienen mittels eines Antriebs verstellbar ist. Das Dachteil ist beidseits jeweils mittels eines Viergelenks an einem an der Führungsschiene verschiebbaren Schlitten gelagert. Ein Steuerhebel des Viergelenks ist im Bereich des Vorderendes der Führungsschiene über ein Eingriffsteil an einer Steuerkulisse in Eingriff, die in Abhängigkeit von der Stellung des Schlittens zur Führungsschiene bzw. zur Steuerkulisse eine Bewegung des Dachteils relativ zum Schlitten steuert.

Aufgabe der Erfindung ist es, ein eingangs genanntes Dachteil zu schaffen, das eine verbesserte Verstellbarkeit aufweist.

Diese Aufgabe wird bei dem oben genannten Dachteil erfindungsgemäß dadurch gelöst, dass das Dachteil mittels einer zusätzlichen steuerbaren Stelleinrichtung relativ zum Lagerschlitten verstellbar ist.

Vorteilhafte Ausgestaltungen der Erfindung sind in den Unteransprüchen angegeben.

Während bei den bekannten Lager- und Verstelleinrichtungen des Dachteils eine Hub- und/oder Neigungsverstellung von der Position seines Lagerschlittens an der Führung und damit von der Position relativ zu einer feststehenden Steuerkulisse abhängig ist, kann mit der erfindungsgemäßen Lösung Ort, Zeit und Größe der Verstellung des Dachteils relativ zum Lagerschlitten unabhängig von der Position oder Bewegung des Lagerschlittens vorgenommen werden. Damit kann eine der Längsverschiebung überlagerte individuelle Schwenkbewegung auf das Dachteil übertragen werden, die das Dachteil beim Schließvorgang beispielsweise schräg abwärts gegen eine Dichtung am Windlauf drücken kann. Zweckmäßigerweise ist dann die Stelleinrichtung mittels einer Betätigungseinrichtung ansteuerbar, die vom Fahrer zu bedienen ist. Des weiteren kann das Dachteil in Abhängigkeit von der Anströmung in seiner Höhe und/oder Neigung gegenüber dem Fahrzeugdach oder Verdeck verstellt werden, wobei vorzugsweise eine Steuereinrichtung zum automatischen Betätigen vorgesehen sein kann. Bei einem ablegbaren Faltverdeck eines Cabriolets kann das Dachteil, das z. B. von einem Frontspriegel gebildet ist, bei abgelegtem Verdeck in seiner Hubstellung variiert und insbesondere abgesenkt werden, um die Sicht nach hinten oder die Optik des Fahrzeugs zu verbessern.

Gemäß einer einfachen Gestaltung ist vorgesehen, dass die Stelleinrichtung einen eigenen Stellantrieb aufweist, der z. B. im Bereich des Antriebs des Lagerschlittens an einem Dachteil wie z. B. einem Querträger oder Querspriegel angeordnet ist. Der Antrieb und der Stellantrieb sind z. B. Elektro-Getriebemotore oder Hydraulikmotore. Andererseits kann die Stelleinrichtung vom Antrieb des Lagerschlittens mittels eines steuerbaren Stellgetriebes betätigbar sein. Dabei übernimmt der Antrieb bzw. Antriebsmotor des Lagerschlittens die beiden Antriebs- und Stellbewegungen aufgrund der Ansteuerung mittels einer entsprechenden Steuereinrichtung.

Wenn das Dachteil mittels einer Lenkereinrichtung an dem Lagerschlitten bewegbar gelagert ist und die Stelleinrichtung mit einem der Lenker gekoppelt ist, kann durch Eingriff an diesem Lenker die Verstellung in einfacher Weise vorgenommen werden, wobei vielfältige Möglichkeiten zur Gestaltung des Eingriffs realisierbar sind. So kann z. B. die Stelleinrichtung ein entlang einer Führungsbahn geführtes Gleitstück aufweisen, das mit der Lagereinrichtung des Dachteils bzw. an einer Steuerkulisse des Lenkers in Eingriff ist, und durch eine Relativbewegung des Gleitstücks gegenüber dem Lagerschlitten kann der Lenker am Lagerschlitten verschwenkt werden. Durch die eigene Führungsbahn für das Gleitstück oder allgemein für das Eingriffsstück ist die aus dem Stand der Technik bekannte Steuerkulisse nicht erforderlich, so dass hierdurch bedingte Fugen oder Übergänge an einer Abzweigung der Steuerkulisse von der Hauptführung bei der erfindungsgemäßen Lösung nicht vorhanden sind.

Wenn der Antrieb und der Stellantrieb über Antriebskabel mit dem Lagerschlitten bzw. den Gleiter verbunden sind, können aufgrund der Aufteilung der Antriebsbewegung auf die zwei Antriebskabel diese schwächer dimensioniert werden. Ebenso können die beiden insbesondere als Elektromotore gebildeten Antriebe schwächer ausgelegt und kleiner dimensioniert werden.

Vorzugsweise enthält die Führungsschiene neben der Führung des Lagerschlittens eine untere Führungsbahn für das Antriebskabel des Lagerschlittens und eine obere Führungsbahn für das Gleitstück und dessen Antriebskabel. Gemäß einer bevorzugten Ausgestaltung kann sich die obere Führungsbahn in ihrem vorderen Bahnabschnitt relativ zur Führung des Lagerschlittens absenken, so dass sich konstruktive Vorteile beim Festlegen der Kinematik des Viergelenks für das Herabschwenken des gesteuerten Lenkers ergeben können.

Vorzugsweise sind demnach der Antrieb des Lagerschlittens und die Stelleinrichtung derart steuerbar, dass in zumindest einer Stellung des Lagerschlittens das Dachteil in seiner Höhenlage und/oder in seiner Schwenkstellung verstellbar ist. Des weiteren kann der Antrieb und die Stelleinrichtung derart steuerbar sein, dass das Dachteil bei ruhendem wie auch bei bewegtem Lagerschlitten in eine definierte Stellung verstellbar ist.

Zweckmäßigerweise ist das Dachteil ein Frontspriegel oder eine Dachspitze, insbesondere eines Faltverdecks eines Cabriolets.

In einer weiteren Ausgestaltung der Erfindung können zumindest zwei dieser Dachteile an der jeweiligen Führung gelagert sein und durch den Antrieb und die Stelleinrichtung verstellbar sein.

Weiterhin kann das Dach ein Lamellendach sein und das zumindest eine Dachteil ist eine Lamelle dieses Daches. Das Dachteil kann grundsätzlich bei allen Arten von Falt- oder auch Lamellendächern, die eine Dachöffnung in einem festen Dach oder einem ablegbaren Dach verschließen können, verwendet werden.

Nachfolgend werden Ausführungsbeispiele des Dachteils mit seiner Lager- und Verstelleinrichtung unter Bezugnahme auf die Zeichnung näher erläutert. Es zeigt:
- Fig. 1: in einer Draufsicht ein Cabriolet-Fahrzeug mit einem Faltverdeck, des- sen bewegbare Dachspitze in Schließstellung wie auch in Offenstel- lung und Ablagestellung (jeweils strichliert) dargestellt ist;
- Fig. 2: in einer Draufsicht gemäß Fig. 1 das Fahrzeug mit dem geschlossenen Faltverdeck und einer schematisch dargestellten Verstellvorrichtung der bewegbaren Dachspitze;
- Fig. 3: in einer Seitenansicht in schematischer Darstellung das Fahrzeug mit geschlossenem Verdeck;
- Fig. 4: in einer Draufsicht das Faltverdeck, dessen Dachspitze in eine Teilöff- nungsstellung verstellt ist;
- Fig. 5: in einer seitlichen Innen- oder Unteransicht das geschlossene Faltver- deck mit der Verstelleinrichtung des Frontspriegels;
- Fig. 6: in einer Ansicht gemäß Fig. 5 einen vergrößerten Ausschnitt mit der Verstelleinrichtung;

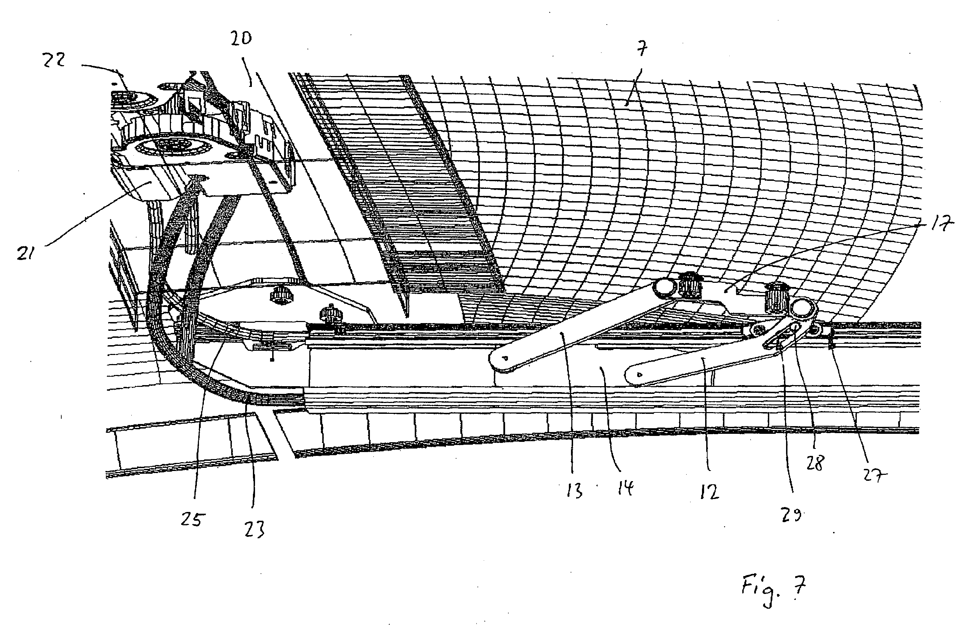

- Fig. 7: in einer Ansicht gemäß Fig. 5 in vergrößerter Darstellung den Frontspriegel in einer an der Führungsschiene nach hinten verschobe- nen geöffneten und abgesenkten Stellung;
- Fig. 8: in einer Ansicht gemäß Fig. 7 den Frontspriegel in der geöffneten ab- gesenkten Stellung, wobei die Führungsschiene nicht dargestellt ist;
- Fig. 9: in einer Ansicht gemäß Fig. 7 den Frontspriegel in der geöffneten, je- doch angehobenen Stellung; und
- Fig. 10: in einer Seitenansicht drei hintereinander angeordnete Lamellen eines Lamellendaches eines Fahrzeugs, wobei die Lamellen mittels gleicher erfindungsgemäßer Verstelleinrichtungen gelagert und bewegbar sind.

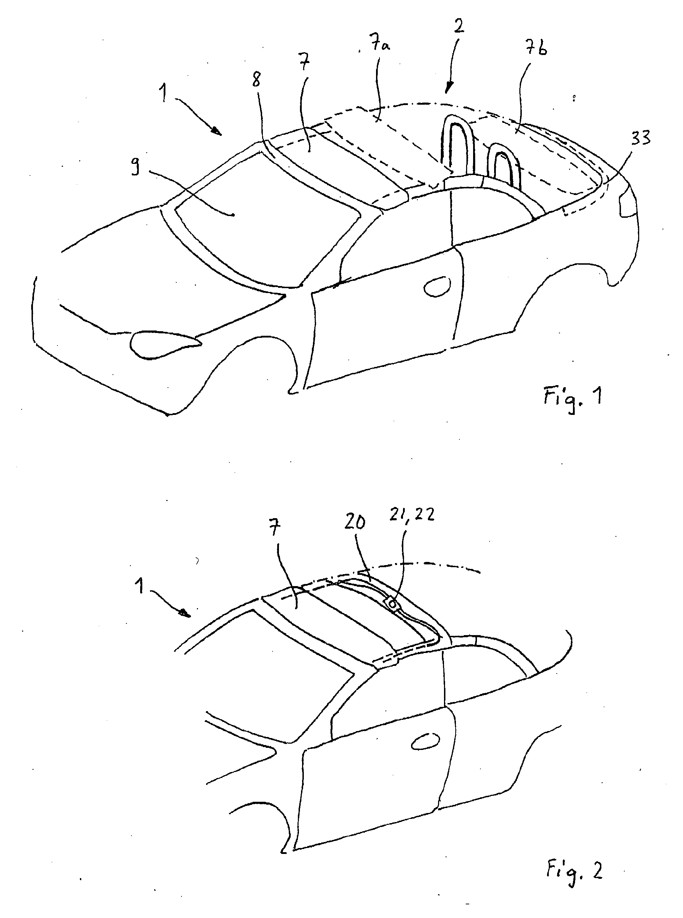

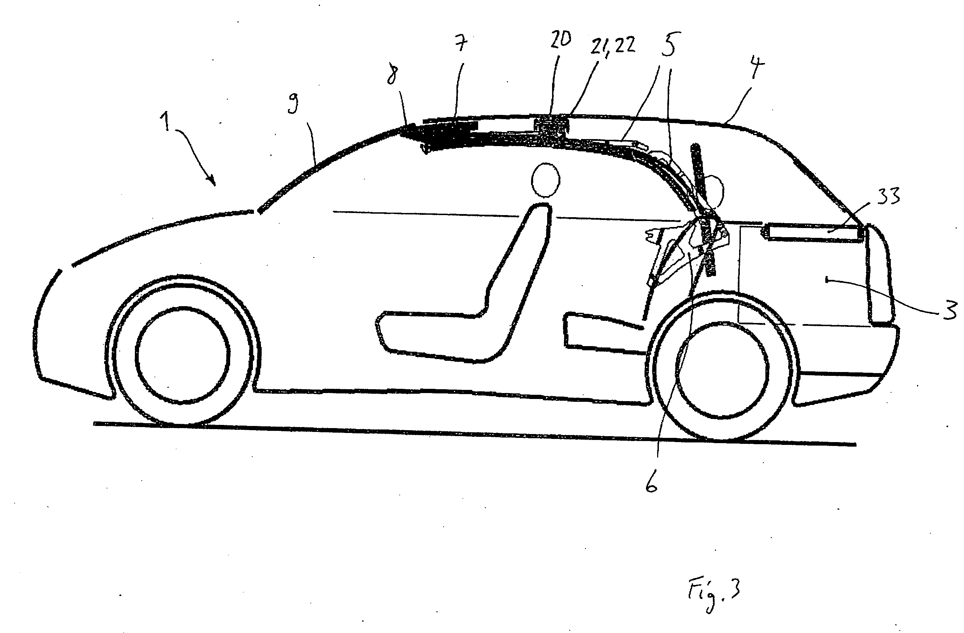

Ein Cabriolet-Fahrzeug 1 enthält ein bewegbares und zum Öffnen absenkbares Faltverdeck 2, das in bekannter Weise zwischen einer den Fahrzeuginnenraum überdeckenden Schließstellung (Fig. 1 bis 3) und einer den Fahrzeuginnenraum freigebenden Offen- oder Ablagestellung, in der es eine heckseitige Ablagestellung insbesondere oberhalb eines Kofferraumes 3 einnimmt, verstellbar ist. Ein derartiges Faltverdeck ist z. B. in der DE 101 02 643 A1 und der DE 199 39 954 A1 offenbart.

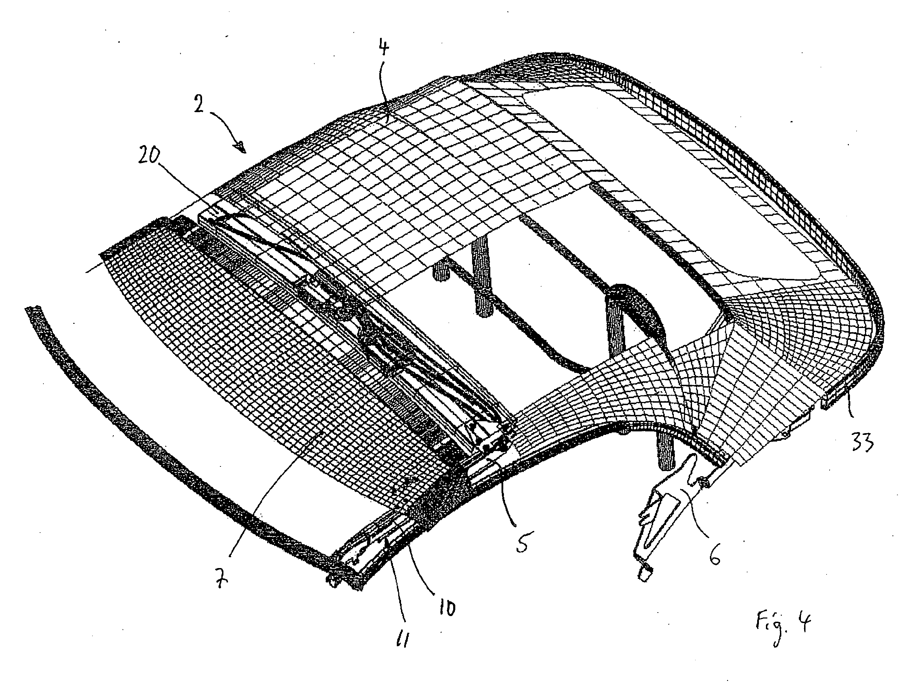

Das Faltverdeck 2 enthält ein einen Verdeckstoff 4 tragendes Verdeckgestänge 5, das beidseits an einem karosseriefesten Hauptlager 6 mittels einer Verdeckkinematik, z. B. mittels zweier Lenker in Viergelenkanordnung, gelagert und zwischen der Schließ- und der Ablagestellung verstellbar ist. Eine Dachspitze des Verdecks 2 ist von einem im wesentlichen als flächige Schale gestalteten Frontspriegel 7 gebildet, der mit dem Verdeckstoff 4 verbunden oder mit diesem überspannt ist und bei geschlossenem Verdeck 2 zwischen seiner Schließstellung, in der er an einem Windlauf 8 bzw. einer daran angebrachten Dichtung oberhalb der Frontscheibe 9 anliegt (Fig. 1 bis 3), und einer Öffnungsstellung, in der er an beidseits angeordneten Führungsschienen 10, die an einem jeweiligen seitlichen vorderen Gestängeschenkel 11 des Verdeckgestänges 5 angeordnet sind, verstellt werden kann (siehe Fig. 1, strichlierte Darstellung 7a, sowie Fig. 4). Damit kann bei grundsätzlich geschlossenem Verdeck 2 eine vordere Teilöffnung des Verdecks 2 z. B. für Lüftungszwecke eingestellt werden, während die seitlichen vorderen Gestängeschenkel 11 am Windlauf 8 oder den A-Säulen verriegelt bleiben.

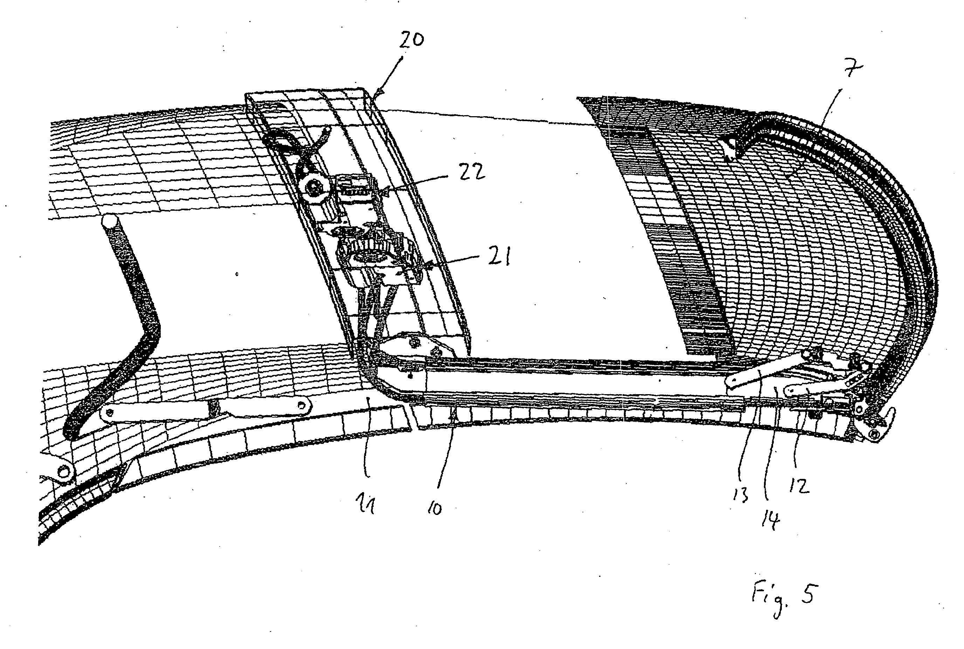

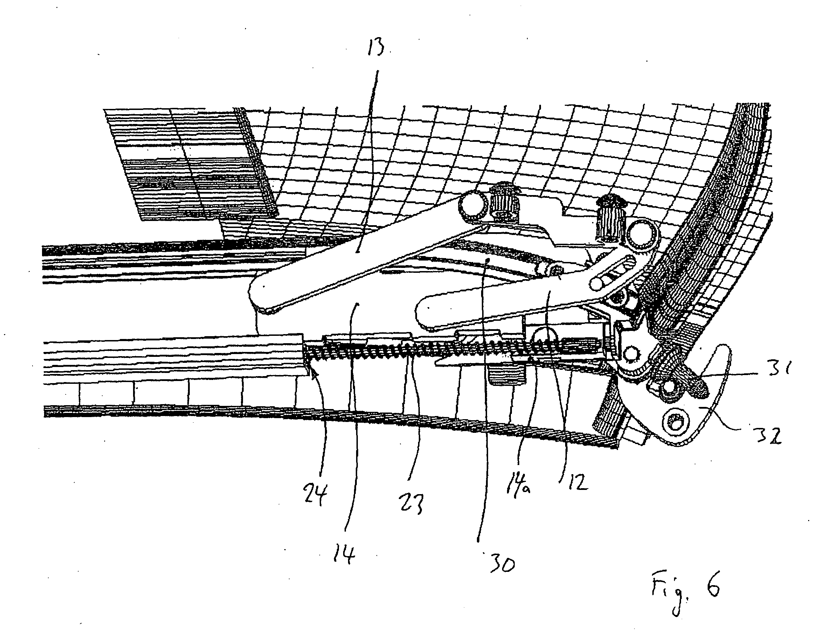

Der Frontspriegel 7 ist beidseits jeweils mittels eines einen vorderen Lenker 12 und einen hinteren Lenker 13 enthaltenden Viergelenks (siehe insbesondere Fig. 5 und 6) an einem Lagerschlitten 14 bewegbar gelagert, der an der seitlichen Führungsschiene 10 verschiebbar angeordnet ist. Die beiden Lenker 12, 13 sind einerseits an dem Lagerschlitten 14 in Gelenken 15 bzw. 16 und andererseits an einer Halterung 17, an der der Frontspriegel 7 befestigt ist, in Gelenken 18 bzw. 19 schwenkbar gelagert.

Ein Querspriegel 20 verbindet die beiden seitlichen Führungsschienen 10 bzw. die vorderen Gestängeschenkel 11 in etwa im Bereich der Hinterenden der beiden Führungsschienen 10 miteinander. An dem Querspriegel 20 ist eine Antriebseinrichtung mit einem Antriebsmotor 21 als Hauptantrieb zum Verschieben des Lagerschlittens 14 entlang der Führungsschiene 10 und einem Stellmotor 22 als zusätzlichen Antrieb zum Einstellen einer Hub- und oder Neigungsstellung des Frontspriegels 7 relativ zum Lagerschlitten 14 und damit zur Führungsschiene 10 bzw. dem Gestängeschenkel 11 angeordnet. Jeweils ein erstes drucksteifes Antriebskabel 23 verläuft vom Antriebsmotor 21 zu einer unteren Führungsbahn 24 jeder der beidseitigen Führungsschienen 10 und ist mit dem Lagerschlitten 14 fest verbunden. Jeweils ein zweites drucksteifes Antriebskabel 25 verläuft vom Stellmotor 22 zu einer oberen Führungsbahn 26 jeder der beidseitigen Führungsschienen 10 und ist mit einem an der Führungsschiene 10 verschiebbar geführten Gleiter 27 oder dergleichen fest verbunden, der einen Steuerstift 28 aufweist, welcher an einer Kulissenführung 29 des vorderen Lenkers 12, z. B. an einem am Lenker 12 gebildeten Langloch, in Eingriff ist. Sowohl der Antriebsmotor 21 wie auch der Stellmotor 22 weisen für die beidseitigen Antriebskabel 23 bzw. 25, die den Antriebskabeln von Schiebedachantrieben gleichen, Schneckenräder auf, die mit den Antriebskabel 23 bzw. 25 in Eingriff stehen.

Die obere Führungsbahn 26 kann über ihre gesamte Länge parallel zur Führungsschiene 10 verlaufen oder sie senkt sich gemäß dem dargestellten Ausführungsbeispiel in ihrem vorderen Bahnabschnitt 30 in Richtung zur unteren Führungsbahn 24 ab, so dass sich der Gleiter 27 relativ zur Führungsschiene 10 absenkt, während er sich nach vorne in seine vordere Endstellung bewegt. In den Fig. 5 und 6 ist zur besseren Darstellung des Antriebskabels 23 und seiner Anbindung an einem mit dem Lagerschlitten 14 verbundenen Befestigungsteil 14a der Vorderabschnitt der unteren Führungsbahn 24 nicht dargestellt.

Bei geschlossenem Verdeck 2 ist jeder Gestängeschenkel 11 mittels eines Zentrierzapfens 31 am Windlauf 8 in zentrierter Schließstellung gehalten und mittels eines Riegels 32 daran verriegelt gehalten. Der Lagerschlitten 14 ist von dem Antriebsmotor 21 und dem Antriebskabel 23 in seine vordere Endstellung verschoben. Der Gleiter 27 ist ebenfalls in seiner vorderen abgesenkten Endstellung angeordnet und ist in einer derartigen Relativstellung zum Lagerschlitten 14, dass er in einer unteren Endstellung in der Kulissenführung 29 des vorderen Lenkers 12 angeordnet ist. Damit hat der Gleiter 27 den vorderen Lenker 12 und damit das Viergelenk und den Frontspriegel 7 nach unten verschwenkt, so dass der Frontspriegel 7 ist in seiner Schließstellung am Windlauf 8 angeordnet ist.

Bei geschlossenem Verdeck 2 kann der Frontspriegel 7 durch Betätigung des Stellmotors 22 wie auch durch gemeinsame Betätigung des Stellmotors 22 und des Antriebsmotors 21 geöffnet und in unterschiedliche Stellung verstellt werden. Wird lediglich der Stellmotor 22 betätigt und dadurch der Gleiter 27 entlang der oberen Führungsbahn 26 nach hinten verschoben, während der Lagerschlitten 14 unverändert bleibt, so wird durch die Bewegung des Steuerstiftes 28 in der Kulissenführung 29 der vordere Lenker 12 und damit das Viergelenk aufwärts verschwenkt, wodurch der Frontspriegel 7 aus der Fläche des geschlossenen Verdecks 2 und vom Windlauf 8 angehoben und dabei entsprechend der Kinematik des Viergelenks nach hinten verlagert bzw. in seiner Neigung verstellt wird. Damit nimmt der Frontspriegel 7 eine erste Lüftungsstellung ein. Wird anfangs oder zeitversetzt zusätzlich auch der Antriebsmotor 21 betätigt, so wird zur Hubbewegung des Frontspriegels 7 auch seine Verschiebung entlang der Führungsschiene 10 mittels des bewegten Lagerschlittens 14 ausgeführt.

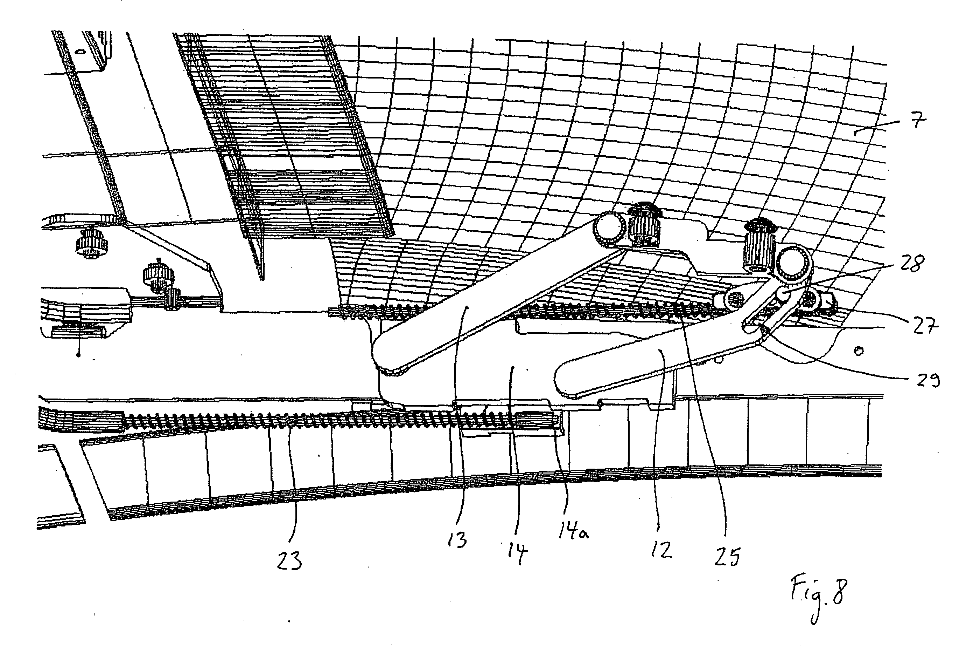

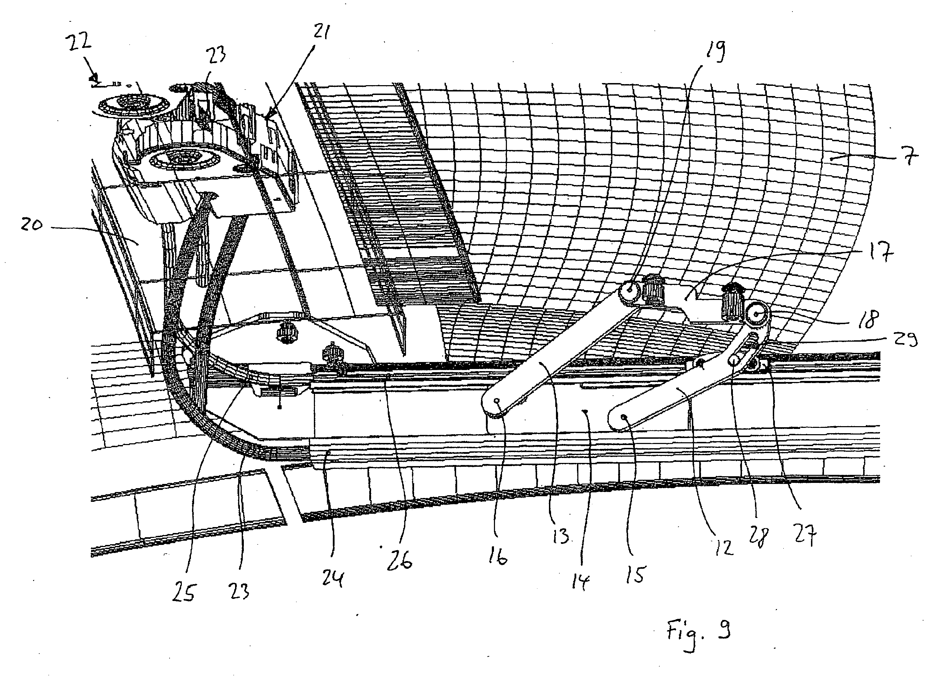

Wenn der Antriebsmotor 21 und der Stellmotor 22 mit aufeinander abgestimmter Verstellgeschwindigkeit betätigt werden, kann der Frontspriegel 7 mittels des sich entlang der Führungsschiene 10 bewegenden Lagerschlittens 14 aus seiner Schließstellung am Windlauf 8 in eine Teilöffnungsstellung oder in seine Endstellung vor dem Querspriegel 20 verlagert werden, wobei sich der Frontspriegel 7 nicht oder nur geringfügig anhebt. In der Teilöffnungsstellung wie auch in der Endstellung kann durch Betätigen des Stellmotors 22 der Gleiter 27 relativ zum Lagerschlitten 14 verlagert werden, so dass der noch abgesenkte Frontspriegel 7 angehoben oder, falls er in einer angehobenen Stellung ist, aus einer Hubstellung auch wieder abgesenkt werden kann (Fig. 8: abgesenkte Stellung des Frontspriegels 7, Fig. 9: angehobene Stellung des Frontspriegels 7).

Wenn der Frontspriegel 7 in seiner Endstellung angeordnet ist oder auch schon bei seiner Öffnungsbewegung können die beiden Gestängeschenkel 11 nach Öffnen der Riegel 32 vom Windlauf 8 gelöst werden, so dass das Verdeck 2 in bekannter Weise in seine heckseitige Ablagestellung bewegt werden kann.

Das Absenken des angehobenen Frontspriegels 7 ist insbesondere bei geöffnetem und abgelegtem Verdeck 2 vorteilhaft, wenn dieses in seiner Ablagestellung auf einem heckseitigen Verdeckspannbügel 33 eine vergleichsweise hohe Position oberhalb des Kofferraums 3 einnimmt und durch Absenken des insbesondere in seiner Endstellung angeordneten Frontspriegels 7 die Sicht des Fahrers nach hinten weniger behindert wird.

Der Frontspriegel 7 kann auch die Dachspitze eines Verdecks für eine Dachöffnung eines Fahrzeugs mit festen Dachlängsholmen bzw. einer die Dachöffnung enthaltenden festen Dachfläche bilden. Die Führungsschienen 11 sind in diesem Fall an den Dachlängsholmen bzw. an seitlichen neben der Dachöffnung angebrachten dachfesten Rahmenteilen angeordnet und die Antriebs- und Stellmotoren sind am Dach gelagert.

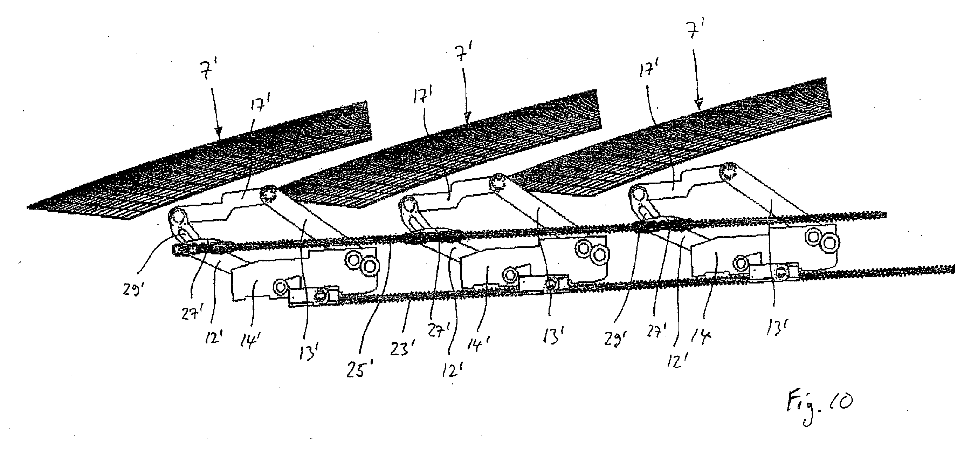

Fig. 10 zeigt ein weiteres abgewandeltes Ausführungsbeispiel, bei dem drei insbesondere gleichartig gebildete Dachteile oder Lamellen 7' eines Lamellendaches, wie es grundsätzlich z. B. aus der DE 41 29 860 C1 bekannt ist, mittels jeweiliger Lagerschlitten 14' (zum ersten Ausführungsbeispiel gleichartige Bauteile sind mit gleichen Bezugszeichen versehen) an einer seitlichen Führungsschiene (nicht dargestellt) verschiebbar geführt ist. Ein von einem Antriebsmotor antreibbares erstes Antriebskabel 23' verbindet die Lagerschlitten 14' in definiertem Abstand miteinander und verschiebt sie demzufolge als Einheit. Ein von einem Stellmotor antreibbares zweites Antriebskabel 25' verbindet die Gleiter 27' der drei vorderen Lenker 12' der jeweiligen die Lamellen 7' lagernden Viergelenke. Auch hier können durch unterschiedliche Kombinationen der Bewegungen der beiden Antriebsmotoren bzw. Antriebskabel 23' und 25' vielfältige Einstellungen und Verstellungen der Lamellen 7' entsprechend dem voranstehend beschriebenen Frontspriegel 7 vorgenommen werden.

Abweichend von der dargestellten Ausführungsform kann die Stellbewegung der Stelleinrichtung zum Verstellen des Frontspriegels 7 relativ zum Lagerschlitten auch über ein Stellgetriebe erfolgen, das mit dem Antrieb des Lagerschlittens gekoppelt ist und über diesen eine steuerbare Stellbewegung erzeugen kann. Ein eigener Stellantrieb bzw. Stellmotor ist dann nicht erforderlich.

### Bezugszeichenliste

- 1: Cabriolet-Fahrzeug
- 2: Faltverdeck
- 3: Kofferraum
- 4: Verdeckstoff
- 5: Verdeckgestänge
- 6: Hauptlager
- 7: Frontspriegel
- 8: Windlauf
- 9: Frontscheibe
- 10: Führungsschiene
- 11: Gestängeschenkel
- 12: vorderer Lenker
- 13: hinterer Lenker
- 14: Lagerschlitten
- 15: Gelenk
- 16: Gelenk
- 17: Halterung
- 18: Gelenk
- 19: Gelenk
- 20: Querspriegel
- 21: Antriebsmotor
- 22: Stellmotor
- 23: erstes Antriebskabel
- 24: untere Führungsbahn
- 25: zweites Antriebskabel
- 26: obere Führungsbahn
- 27: Gleiter
- 28: Steuerstift
- 29: Kulissenführung
- 30: vorderer Bahnabschnitt
- 31: Zentrierzapfen
- 32: Riegel
- 33: Verdeckspannbügel

## Patentansprüche

1. Dachteil eines öffnungsfähigen Fahrzeugdaches, das mittels einer Lagereinrichtung an einem Lagerschlitten bewegbar gelagert ist, der an einer Führung des Fahrzeugdaches verschiebbar gelagert und mittels eines Antriebs entlang der Führung verstellbar ist,
**dadurch gekennzeichnet,**
**dass** das Dachteil (7) mittels einer zusätzlichen steuerbaren Stelleinrichtung (22, 25, 27) relativ zum Lagerschlitten (14) verstellbar ist.

2. Dachteil nach Anspruch 1,
**dadurch gekennzeichnet, dass** die Stelleinrichtung (22, 25, 27) einen eigenen Stellantrieb (22) aufweist oder vom Antrieb (21) des Lagerschlittens mittels eines steuerbaren Stellgetriebes betätigbar ist.

3. Dachteil nach Anspruch 1 oder 2,
**dadurch gekennzeichnet, dass** das Dachteil (7) mittels einer Lenkereinrichtung 12, 13) an dem Lagerschlitten (14) bewegbar gelagert ist und die Stelleinrichtung (22, 25, 27) mit einem der Lenker (12, 13) gekoppelt ist.

4. Dachteil nach einem der Ansprüche 1 bis 3,
**dadurch gekennzeichnet, dass** die Stelleinrichtung (22, 25, 27) ein entlang einer Führungsbahn (26) geführtes Gleitstück (27) aufweist, das mit der Lagereinrichtung (12, 13) des Dachteils (7) bzw. an einer Steuerkulisse (29) des Lenkers (12) in Eingriff ist, und dass durch eine Relativbewegung des Gleitstücks (27) gegenüber dem Lagerschlitten (14) der Lenker (12) am Lagerschlitten (14) verschwenkt wird.

5. Dachteil nach einem der Ansprüche 1 bis 4,
**dadurch gekennzeichnet, dass** der Antrieb (21) des Lagerschlittens und die Stelleinrichtung (22) derart steuerbar sind, dass in zumindest einer Stellung des Lagerschlittens (14) das Dachteil (7) in seiner Höhenlage und/oder in seiner Schwenkstellung verstellbar ist.

6. Dachteil nach einem der Ansprüche 1 bis 5,
**dadurch gekennzeichnet, dass** der Antrieb (21) und die Stelleinrichtung (22) derart steuerbar sind, dass das Dachteil (7) bei ruhendem wie auch bei bewegtem Lagerschlitten (14) in eine definierte Stellung verstellbar ist.

7. Dachteil nach einem der Ansprüche 1 bis 6,
**dadurch gekennzeichnet, dass** der Antrieb (21) und die Stelleinrichtung (22) mittels eines jeweiligen drucksteifen Antriebskabels (23 bzw. 25) mit dem Lagerschlitten (14) bzw. dem Gleitstück (27) verbunden sind.

8. Dachteil nach Anspruch 7,
**dadurch gekennzeichnet, dass** die Führungsschiene (10) eine untere Führungsbahn (24) für das Antriebskabel (23) des Lagerschlittens (14) und eine obere Führungsbahn (26) für das Gleitstück (27) und dessen Antriebskabel (25) aufweist.

9. Dachteil nach Anspruch 8,
**dadurch gekennzeichnet, dass** sich die obere Führungsbahn (26) in ihrem vorderen Bahnabschnitt (30) relativ zur Führung (10) des Lagerschlittens (14) absenkt.

10. Dachteil nach einem der Ansprüche 1 bis 9,
**dadurch gekennzeichnet, dass** das Dachteil ein Frontspriegel (7) oder eine Dachspitze ist.

11. Dachteil nach einem der Ansprüche 1 bis 9,
**dadurch gekennzeichnet, dass** zumindest zwei dieser Dachteile (7) an der Führung (10) gelagert sind und durch den Antrieb (21) und die Stelleinrichtung (22) verstellbar sind.

12. Dachteil nach einem der Ansprüche 1 bis 11,
**dadurch gekennzeichnet, dass** das Dach ein verstellbares Faltverdeck (2) eines Cabriolets (1) ist.

13. Dachteil nach einem der Ansprüche 1 bis 11,
**dadurch gekennzeichnet, dass** das Dach ein Lamellendach ist und dass das zumindest eine Dachteil eine Lamelle (7') dieses Daches ist.

## Claims

1. Roof part of an openable vehicle roof, which is mounted movably by means of a bearing device on a bearing slide which is mounted in a manner such that it can be shifted on a guide of the vehicle roof and can be displaced along the guide by means of a drive, **characterized in that** the roof part (7) can be displaced relative to the bearing slide (14) by means of an additional controllable adjusting device (22, 25, 27).

2. Roof part according to Claim 1, **characterized in that** the adjusting device (22, 25, 27) has its own actuator (22) or can be actuated by the drive (21) of the bearing slide by means of a controllable adjusting mechanism.

3. Roof part according to Claim 1 or 2, **characterized in that** the roof part (7) is mounted movably on the bearing slide (14) by means of a link device (12, 13), and the adjusting device (22, 25, 27) is coupled to one of the links (12, 13).

4. Roof part according to one of Claims 1 to 3, **characterized in that** the adjusting device (22, 25, 27) has a sliding component (27) which is guided along a guide track (26) and is in engagement with the bearing device (12, 13) of the roof part (7) and at a control slot (29) of the link (12), and **in that**, by means of a relative movement of the sliding component (27) in relation to the bearing slide (14), the link (12) is pivoted on the bearing slide (14).

5. Roof part according to one of Claims 1 to 4, **characterized in that** the drive (21) of the bearing slide and the adjusting device (22) can be controlled in such a manner that, in at least one position of the bearing slide (14), the roof part (7) can be adjusted in its vertical position and/or in its pivoted position.

6. Roof part according to one of Claims 1 to 5, **characterized in that** the drive (21) and the adjusting device (22) can be controlled in such a manner that the roof part (7) can be displaced into a defined position while the bearing slide (14) is at rest and also while it is moving.

7. Roof part according to one of Claims 1 to 6, **characterized in that** the drive (21) and the adjusting device (22) are respectively connected to the bearing slide (14) and the sliding component (27) by means of a respective compression-resistant driving cable (23 and 25).

8. Roof part according to Claim 7, **characterized in that** the guide rail (10) has a lower guide track (24) for the driving cable (23) of the bearing slide (14) and an upper guide track (26) for the sliding component (27) and the driving cable (25) thereof.

9. Roof part according to Claim 8, **characterized in that** the upper guide track (26) is lowered in its front track section (30) relative to the guide (10) of the bearing slide (14).

10. Roof part according to one of Claims 1 to 9, **characterized in that** the roof part is a front bow (7) or a roof peak.

11. Roof part according to one of Claims 1 to 9, **characterized in that** at least two of these roof parts (7) are mounted on the guide (10) and can be displaced by the drive (21) and the adjusting device (22).

12. Roof part according to one of Claims 1 to 11, **characterized in that** the roof is a displaceable folding top (2) of a convertible (1).

13. Roof part according to one of Claims 1 to 11, **characterized in that** the roof is a lamella roof, and **in that** the at least one roof part is a lamella (7') of said roof.

## Revendications

1. Pièce de toit d'un toit ouvrant de véhicule, disposée de façon à pouvoir être déplacée à l'aide d'un dispositif de palier disposé contre un palier coulissant disposé de façon coulissante contre un guide du toit de véhicule et pouvant être déplacé le long du guide à l'aide d'un entraînement, **caractérisée en ce que** la pièce de toit (7) est mobile par rapport au palier coulissant (14) à l'aide d'un dispositif de réglage (22, 25, 27) commandable supplémentaire.

2. Pièce de toit selon la revendication 1, **caractérisée en ce que** le dispositif de réglage (22, 25, 27) comporte un entraînement de réglage (22) propre ou peut être actionné par l'entraînement (21) du palier coulissant à l'aide d' un engrenage de réglage commandable.

3. Pièce de toit selon la revendication 1 ou 2, **caractérisée en ce que** la pièce de toit (7) est disposée de façon mobile au niveau du palier coulissant (14) à l'aide d' un dispositif de direction (12, 13) et que le dispositif de réglage (22, 25, 27) est couplé à un des volants de direction (12, 13).

4. Pièce de toit selon l'une quelconque des revendications 1 à 3, **caractérisée en ce que** le dispositif de réglage (22, 25, 27) comporte une pièce coulissante (27) guidée le long d'un rail de guidage (26) qui est engrenée avec le dispositif de palier (12, 13) de la pièce de toit (7) et/ou au niveau d'un coulisseau de commande (29) du volant de direction (12) et que le volant de direction (12) est pivoté au niveau du palier coulissant (14) par un mouvement relatif de la pièce coulissante (27) par rapport au palier coulissant (14).

5. Pièce de toit selon l'une quelconque des revendications 1 à 4, **caractérisée en ce que** l'entraînement (21) du palier coulissant et le dispositif de réglage (22) sont commandables de telle sorte que dans au moins une position du palier coulissant (14), la pièce de toit (7) est mobile dans sa position de hauteur et/ou dans sa position de pivotement.

6. Pièce de toit selon l'une quelconque des revendications 1 à 5, **caractérisée en ce que** l'entraînement (21) et le dispositif de réglage (22) sont commandables de telle sorte que la pièce de toit (7) est mobile dans une position définie lorsque le palier coulissant (14) est au repos ou en déplacement.

7. Pièce de toit selon l'une quelconque des revendications 1 à 6, **caractérisée en ce que** l'entraînement (21) et le dispositif de réglage (22) sont reliés au palier coulissant (14) et/ou à la pièce coulissante (27) à l'aide d' un câble d' entraînement respectif (23 et/ou 25) rigide à la pression.

8. Pièce de toit selon la revendication 7, **caractérisée en ce que** le rail de guidage (10) comporte un rail de guidage inférieur (24) pour le câble d'entraînement (23) du palier coulissant (14) et un rail de guidage supérieur (26) pour la pièce coulissante (27) et son câble d'entraînement (25).

9. Pièce de toit selon la revendication 8, **caractérisée en ce que** le rail de guidage supérieur (26) s'abaisse dans son segment de voie (30) avant par rapport au guide (10) du palier coulissant (14).

10. Pièce de toit selon l'une quelconque des revendications 1 à 9, **caractérisée en ce que** la pièce de toit est un arceau avant (7) ou une pointe de toit.

11. Pièce de toit selon l'une quelconque des revendications 1 à 9, **caractérisée en ce qu'**au moins deux de ces pièces de toit (7) sont disposées au niveau du guide (10) et sont mobiles du fait de l'entraînement (21) et du dispositif de réglage (22).

12. Pièce de toit selon l'une quelconque des revendications 1 à 11, **caractérisée en ce que** le toit est une capote pliante mobile (2) d'un cabriolet (1).

13. Pièce de toit selon l'une quelconque des revendications 1 à 11, **caractérisée en ce que** le toit est un toit à lamelles et que l'au moins une pièce de toit est une lamelle (7') de ce toit.
